# FASCICULE DE BREVET EUROPEEN

(11) **EP 2 972 581 B1**
(45) Date de publication et mention de la délivrance du brevet: **06.05.2020**
(21) Numéro de dépôt: 14709976.6
(22) Date de dépôt: 14.03.2014
(51) Int. Cl.: G03B 37/00, G06Q 30/06, G03B 17/40, G03B 17/53, G03B 29/00

(54) **SYSTÈME PHOTOGRAPHIQUE PANORAMIQUE COMPORTANT UN MIROIR SANS TAIN**
PHOTOGRAPHISCHE SYSTEM MIT SPIEGEL OHNE BLATTZINN
PHOTOGRAPHIC SYSTEM WITH VIEW MIRROR WITHOUT TAIN

(30) Priorité: 15.03.2013 FR 1352335
(43) Date de publication de la demande: 20.01.2016
(73) Titulaire: Gosset, Stéphane, 51200 Epernay (FR)
(72) Inventeur: Gosset, Stéphane, 51200 Epernay (FR)
(74) Mandataire: Regimbeau
(86) Numéro de dépôt international: PCT/EP2014/055146
(87) Numéro de publication internationale: WO 2014/140303

(56) Documents cités:
- EP-A1- 1 217 817
- JP-A- 2004 297 733
- JP-A- 2004 297 734
- US-A- 5 587 740
- US-A- 5 737 729
- US-A1- 2007 189 763

## Description

### DOMAINE TECHNIQUE GENERAL ET CONTEXTE DE L'INVENTION

La présente invention concerne un système photographique panoramique comportant un miroir sans tain.

Un tel système peut être utilisé dans le cadre d'un usage personnel et privé ou peut être utilisé dans un cadre public et commercial, par exemple dans des magasins d'habillement ou de cosmétique, des salons, des foires ou des évènements publics.

### ETAT DE L'ART

On connait de l'état de la technique de nombreux systèmes pour permettre à un utilisateur de se prendre seul en photographie. Certains dispositifs connus utilisent un miroir sans tain derrière lequel est placé un appareil photographique ou une caméra. Le miroir sans tain permet à l'appareil photographique ou à la caméra de prendre une image d'un utilisateur situé de l'autre côté du miroir. Cet utilisateur ne peut pas voir à travers le miroir sans tain mais peut observer son image réfléchie. Ainsi, il peut contrôler le moment de déclenchement de l'appareil photographique et donc s'assurer de la qualité et du cadrage de l'image obtenue.

A titre d'exemple, le document WO 91/03761 décrit une cabine comportant un miroir sans tain derrière lequel un appareil photographique est placé face à l'utilisateur de l'autre côté du miroir et est déclenché à distance par celui-ci.

Cependant, un tel dispositif est encombrant et ne peut donc pas être placé dans un espace réduit. En outre, l'appareil photographique décrit est de type argentique, ce qui complique l'utilisation d'un tel dispositif qui peut s'avérer peu commode.

D'autres dispositifs de l'art antérieur décrivent des dispositifs interactifs permettant de prendre une photo d'un sujet.

Le document JP2009-284361 décrit un écran tactile qui tend à jouer le rôle de miroir. Celui-ci permet en fonction des images prises de « simuler » des essayages, et l'utilisateur peut interagir avec cet écran.

Toutefois, dans ce document, la caméra est située sur le côté de l'écran de sorte que l'utilisateur n'obtient pas directement son image de face mais partiellement de profil. L'image acquise ne correspond donc pas exactement à l'image perçue par l'utilisateur en regardant l'écran.

Le document JP2004-297733 décrit une caméra située derrière un écran à cristaux liquide face à l'utilisateur.

De même, le dispositif mimirror® (http://mi-mirror.com) est un écran numérique avec un appareil photo intégré qui sert aussi de miroir qui peut capturer des images à partager en ligne via les médias sociaux ou par courriel.

Toutefois, ces dispositifs sont principalement conçus pour que l'utilisateur puisse seulement voir et prendre une image de son visage qui est reproduite par le dispositif. Ils nécessitent donc un recul important de l'utilisateur par rapport à l'écran si celui-ci souhaite avoir son image en pied entièrement reproduite.

En outre, le système de déclenchement à distance du dispositif est peu commode et difficile d'utilisation.

Enfin, le traitement des images acquises de l'utilisateur et leurs sauvegardes est directement intégré au système d'acquisition d'images, ce qui complique leur gestion. Ceci peut également poser des problèmes de respect des données personnelles si ces images sont conservées sans le consentement de l'utilisateur ou trop facilement accessibles à des tiers, voire d'atteinte au respect de la vie privée lorsque les images se révèlent avoir un caractère intime ou personnel.

Autres systèmes photographiques conventionnels sont décrits dans les documents JP 2004/297733 et JP 2004/297734. Z

Un des objets de l'invention consiste donc à réaliser un dispositif permettant d'obtenir une image en pied de l'utilisateur, ceci même lorsque la distance de recul face au dispositif est réduite.

Un autre objet de l'invention est de faciliter le déclenchement à distance par l'utilisateur du dispositif de prise d'image.

Un autre objet de l'invention est également de faciliter le contrôle et la gestion par l'utilisateur du traitement et de la sauvegarde des images acquises.

### PRESENTATION GENERALE DE L'INVENTION

L'invention propose de pallier au moins un des inconvénients des systèmes précités, préférentiellement tous. A cet effet, on propose un système photographique comportant :
- un module d'acquisition d'images comportant :
   - un miroir sans tain permettant à un utilisateur placé face audit miroir sans tain de voir son image réfléchie, et
   - des moyens d'acquisition optique placés du côté dudit miroir sans tain opposé audit utilisateur, et
- un dispositif de déclenchement permettant de déclencher lesdits moyens d'acquisition optique pour effectuer une acquisition d'images,
- lesdits moyens d'acquisition optique permettant de prendre une pluralité d'images correspondant à une pluralité de prises de vue de l'utilisateur,
- ledit dispositif de déclenchement étant un terminal mobile connecté audit module d'acquisition via un réseau, ledit terminal mobile comprenant des moyens de traitement de données configurés pour recevoir depuis ledit module d'acquisition ladite pluralité d'images et la traiter de sorte à reconstruire une image panoramique de l'utilisateur.

L'utilisation d'un terminal mobile en tant que dispositif de déclenchement permet de simplifier l'utilisation du module d'acquisition qui peut être facilement contrôlé à distance.

L'utilisation du même terminal mobile pour effectuer le traitement et la reconstitution de l'image panoramique permet également une utilisation simple et rapide du système puisque l'image est directement accessible à l'utilisateur pour consultation sur ce terminal mobile. L'utilisateur peut ainsi facilement l'utiliser et, par exemple, directement la partager sur internet ou sur des réseaux sociaux.

Un unique terminal mobile permet donc de gérer l'ensemble des étapes nécessaires pour obtenir une photographie sans avoir besoin d'interagir directement avec le module d'acquisition qui conserve un aspect passif de miroir classique vis-à-vis de l'utilisateur.

Le traitement d'images afin de reconstruire une seule image panoramique permet d'obtenir une photographie en pied de l'utilisateur notamment lorsque la distance de recul face à l'écran est très réduite, comme c'est le cas dans des cabines d'essayage de magasins d'habillement par exemple.

En outre, les images de l'utilisateur peuvent être ainsi exclusivement traitées et sauvegardées sur le terminal mobile ce qui permet d'éviter des problèmes liés au respect des données personnelles si ces images étaient conservées par le module d'acquisition, voire d'atteinte au respect de la vie privée lorsque ces images se révèlent avoir un caractère intime ou personnel.

L'invention est avantageusement complétée par les caractéristiques suivantes, prises seules ou en une quelconque de leur combinaison techniquement possible :
- le terminal mobile comporte des moyens de stockage des images acquises ;
- une application mise en œuvre par les moyens de traitement de données du terminal mobile permet à la fois de déclencher les moyens d'acquisition optique pour effectuer une acquisition d'images et de traiter la pluralité d'images de sorte à reconstruire une image panoramique ;
- le réseau est un réseau sans fil choisi parmi un réseau wifi, un réseau bluetooth, un réseau infrarouge ou un réseau de téléphonie ;
- les moyens d'acquisition optique comprennent une caméra mobile ;
- les moyens d'acquisition comprennent une pluralité de caméras.

L'invention concerne également un procédé de photographie comportant les étapes :
- de déclenchement, par l'envoi d'une requête provenant d'un terminal mobile, d'un module d'acquisition comportant :
   - un miroir sans tain permettant à un utilisateur placé face audit miroir sans tain de voir son image réfléchie, et
   - des moyens d'acquisition optique placés du côté dudit miroir sans tain opposé audit utilisateur,
- d'acquisition par lesdits moyens d'acquisition optique d'une pluralité d'images correspondant à une pluralité de prises de vue de l'utilisateur,
- de transmission audit terminal mobile via un réseau de ladite pluralité d'images, et
- de traitement par des moyens de traitement de données dudit terminal mobile de ladite pluralité d'images de sorte à reconstruire une image panoramique de l'utilisateur.

Le procédé selon l'invention est avantageusement complété par les étapes suivantes, prises seules ou en une quelconque de leur combinaison techniquement possible :
- de sauvegarde de l'image panoramique reconstruite par des moyens de stockage du terminal mobile ;
- d'identification du terminal mobile par le module d'acquisition ;
- de transmission de l'image panoramique reconstruite par le terminal mobile via le réseau à un serveur.

### PRESENTATION DES FIGURES

D'autres caractéristiques et avantages de l'invention ressortiront encore de la description qui suit, laquelle est purement illustrative et non limitative. Cette description doit être lue sur la base des dessins annexés, sur lesquels
- la figure 1 représente une vue de face du système photographique selon un mode de réalisation préféré de l'invention ;
- La figure 2 représente une vue profil du même système photographique décrit en figure 1, et
- la figure 3 représente un diagramme flux ou « call flow » de la mise en œuvre d'un procédé de photographie selon l'invention.

### DESCRIPTION DETAILLEE DE L'INVENTION

### Système photographique

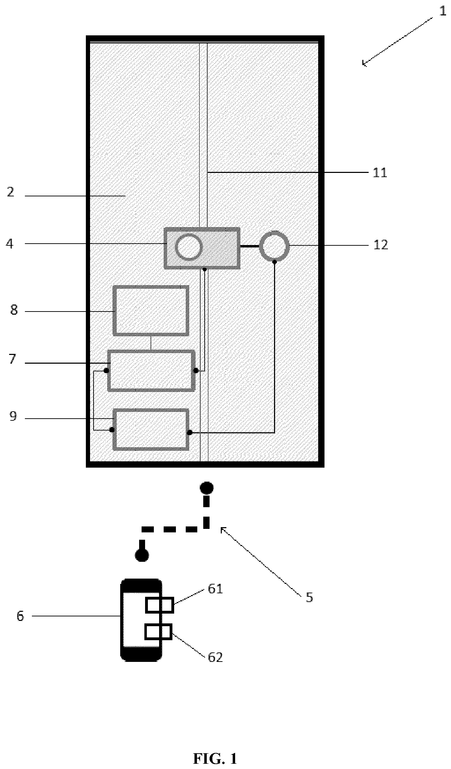

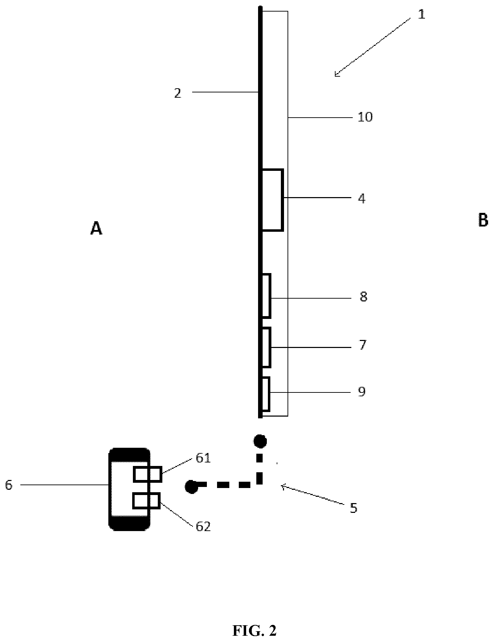

En référence aux figures 1 et 2, l'invention concerne un système photographique comprenant un module d'acquisition 1 comportant un miroir sans tain 2, des moyens d'acquisition optique 4 d'images, ainsi qu'un dispositif de déclenchement.

Le miroir sans tain 2 est généralement constitué d'une plaque de verre, de plexiglas ou d'un autre matériau dont l'une des surfaces est recouverte d'une fine couche métallique. Un utilisateur 3 situé face à cette surface du miroir sans tain 2 dans une pièce éclairée voit son reflet comme dans un miroir normal et ne peut donc pas voir ce qui est situé derrière le miroir sans tain 2. A l'inverse une personne ou un dispositif situé de l'autre côté du miroir sans tain 2 et qui est placé dans l'obscurité peut observer à travers celui-ci la pièce éclairée.

Selon le dispositif de l'invention illustré par les figures 1 et 2, l'utilisateur 3 qui est placé face au miroir du côté A voit seulement son reflet et peut penser avoir devant lui un miroir classique et non pas un miroir connecté. De préférence, tous les éléments composant le module d'acquisition 1 sont en effet situés de l'autre côté B du miroir sans tain 2 et ne lui sont pas visibles.

Le miroir sans tain 2 peut avoir une forme quelconque. Il peut être encadré et être de préférence rectangulaire, carré, ovale ou circulaire.

Les moyens d'acquisition optique 4 sont situés du côté B du miroir sans tain 2 opposé à l'utilisateur 3.

Ces moyens d'acquisition optique 4 peuvent notamment être un appareil photographique ou une caméra. En référence à la figure 1, ils comprennent de préférence une caméra mobile capable de prendre une pluralité d'images correspondant à des prises de vue différentes, notamment selon une direction verticale ou horizontale. Par image(s) on comprend toute séquence d'images, y compris la vidéo. Cette caméra mobile peut notamment avoir un mouvement de rotation paramétrable par l'intermédiaire d'un moteur pas à pas 12 relié à la caméra mobile par un axe de rotation. Le nombre de rotation paramétrable est de préférence compris entre 2 et 8.

Les moyens d'acquisition optique 4 peuvent également comprendre une pluralité de caméras, chacune des caméras étant située à un endroit différent derrière le miroir sans tain 2 et face à l'utilisateur 3.

De préférence également, les moyens d'acquisition optique 4 sont disposés sur un rail de guidage 11 afin de pouvoir être translatés selon un axe vertical et permettre d'adapter la hauteur des prises de vue à la taille de l'utilisateur 3 face au miroir sans tain 2 par exemple.

L'acquisition d'une pluralité de prises de vue permet par la suite, une fois ces images transmises au terminal mobile 6, de reconstruire une seule image panoramique, en particulier une image qui soit une exacte reproduction de l'utilisateur 3, notamment une image en pied. Ceci peut être particulièrement utile lorsque l'utilisateur 3 ne dispose pas d'un recul suffisant face au miroir sans tain 2, comme cela est souvent le cas dans une cabine d'essayage d'un magasin d'habillement par exemple.

Le module d'acquisition 1 peut en outre comprendre d'autres éléments utiles à son fonctionnement.

Un de ces éléments peut être une unité centrale 9 comprenant à titre d'exemple une carte mère ou un processeur. L'unité centrale 9 permet de gérer l'étape d'acquisition de la pluralité d'images et permet leur transmission au terminal mobile 6 une fois celle-ci acquise par les moyens d'acquisition optique 4.

Le module d'acquisition 1 peut également comprendre un connecteur 7 auquel est notamment branchée l'alimentation électrique du module d'acquisition 1 et qui centralise la connexion des différents éléments du module d'acquisition 1.

Le module d'acquisition 1 peut en outre comprendre des moyens de transmission de données 8 servant à communiquer via un réseau 5 avec le terminal mobile 6.

En référence à la figure 2, les autres éléments sont placés derrière le miroir sans tain 2 du même côté B que les moyens d'acquisition optique 4. Ils sont connectés entre eux par des moyens qui sont de préférence filaires, par exemple par des moyens électriques, Ethernet, USB ou GPIO. Les moyens d'acquisition optique 4 peuvent notamment être connectés à l'unité centrale 9 ou au connecteur 7 par un bus USB ou une prise RJ45.

Afin que le miroir sans tain 2 fonctionne efficacement, l'ensemble des éléments composant le module d'acquisition 1 situés derrière le miroir sans tain 2 du côté B sont recouverts d'une enveloppe opaque 10, pouvant être rigide ou flexible, et permettant de placer ces éléments, et notamment les moyens d'acquisition optique 4, dans l'obscurité.

Le module d'acquisition 1 est connecté via le réseau 5 à un dispositif de déclenchement.

Le dispositif de déclenchement est un terminal mobile 6 qui peut être de n'importe quel type (y compris smartphones et tablettes tactiles) qui soit capable de se connecter au réseau 5.

Il permet à un utilisateur 3 de déclencher à distance les moyens d'acquisition optique 4 pour effectuer une acquisition d'images.

Le terminal mobile 6 comprend des moyens de traitement de données 61 (en particulier un processeur) et une interface consistant en un écran et des moyens de saisie (un clavier, une surface tactile, etc.) pour interagir avec l'utilisateur 3.

Il peut également comprendre des moyens de stockage 62 afin de sauvegarder des images transmises par le module d'acquisition 1 ainsi que l'image panoramique reconstruite.

Le contrôle du module d'acquisition 1 à distance peut être effectué par l'intermédiaire d'une application mise en œuvre par les moyens de traitement de données 61 du terminal mobile 6. Celle-ci permet à la fois de déclencher les moyens d'acquisition optique 4 pour effectuer une acquisition d'images et de contrôler les moyens de traitement de données 61 configurés pour recevoir depuis les moyens de transmission de données 8 la pluralité d'images et la traiter de sorte à reconstruire une image panoramique.

L'application est destinée de préférence à tout type de système d'exploitation utilisé pour faire fonctionner des terminaux mobiles 6.

En référence aux figures 1 et 2, le terminal mobile 6 et le module d'acquisition 1 sont connectés entre eux via le réseau 5. Celui-ci peut être géré au niveau du module d'acquisition 1 par l'intermédiaire des moyens de transmission de données 8. Il est de préférence sans fil. Il peut notamment être choisi parmi un réseau wifi, un réseau bluetooth, un réseau infrarouge ou un réseau de téléphonie mobile (GSM, 3G, etc.).

### Procédé de photographie

Selon un second aspect, l'invention concerne un procédé de photographie.

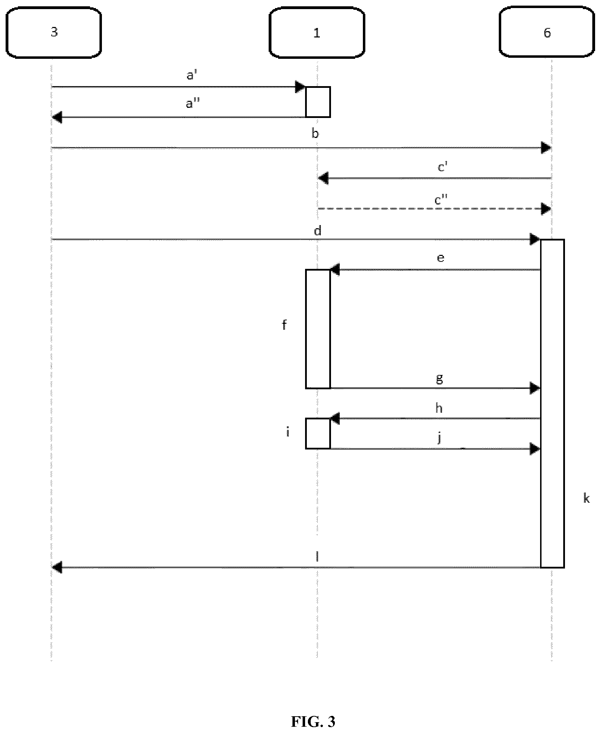

En référence à la figure 3 va être décrit un exemple particulièrement préféré de mise en œuvre du présent procédé selon l'invention. Ce procédé met en œuvre l'utilisateur 3, le terminal mobile 6 et le module d'acquisition 1 : l'utilisateur 3 interagit directement avec le terminal mobile 6 par l'intermédiaire de l'application préinstallée sur celui-ci ; le module d'acquisition 1 interagit avec le terminal mobile 6 via le réseau 5. Le réseau 5 peut ainsi transmettre des requêtes ou des messages échangés, chiffrés ou non. Ces derniers peuvent être envoyés sous n'importe quelle forme susceptible d'être reconnue et traitée par le terminal mobile 6 et le module d'acquisition 1.
a. L'utilisateur 3 réalise l'association et l'identification du terminal mobile 6 par le module d'acquisition 1 en lui envoyant une requête (a'). Le module d'acquisition 1 renvoie ensuite une requête l'informant que l'association souhaitée a réussi (a") ;
b. L'utilisateur 3 ouvre une application préinstallée sur le terminal mobile 6 spécifique à l'utilisation du module d'acquisition 1 ;
c. L'application se connecte au module d'acquisition 1 (c'), ce dernier l'informant que la connexion souhaitée a réussi (c") ;
d. L'utilisateur 3 sélectionne la commande photo de l'application, notamment en cliquant ou par contact tactile ;
e. L'application déclenche, par l'envoi d'une requête au module d'acquisition 1 l'acquisition d'une pluralité d'images ;
f. Les moyens d'acquisition optique 4 acquièrent une pluralité d'images correspondant à une pluralité de prises de vue de l'utilisateur 3 ;
g. Les moyens d'acquisition optique 4 informent l'application de la fin de l'acquisition des images ;
h. L'application se connecte au module d'acquisition 1 afin de pouvoir télécharger la pluralité de prise de vue ;
i. Le module d'acquisition 1 transmet au terminal mobile 6 la pluralité d'images ;
j. Les moyens d'acquisition optique 4 informent l'application de la fin de transmission des images ;
k. Les moyens de traitement de données 61 du terminal mobile 6 traitent la pluralité d'images de sorte à reconstruire une image panoramique de l'utilisateur 3 ;
l. L'application affiche l'image panoramique reconstruite pour que l'utilisateur 3 puisse l'observer.

En outre, le précédé peut comporter une étape de sauvegarde de l'image panoramique reconstruite par des moyens de stockage 62 du terminal mobile 6.

Le procédé peut également comporter une étape de transmission de l'image panoramique reconstruite de l'utilisateur 3 par le terminal mobile 6 via le réseau 5 à un serveur, en particulier un serveur d'un site internet.

L'utilisation d'un terminal mobile 6 et d'une application dédiée permet d'utiliser de façon simple et rapide le module d'acquisition 1 afin de prendre une image panoramique, notamment de l'utilisateur 3, et éventuellement de partager cette image directement sur les réseaux sociaux.

L'utilisateur 3 pourra ainsi décider d'utiliser l'image panoramique reconstruite sur des sites internet, en particulier dans le cas où ces sites sont des réseaux sociaux, tels que Facebook, Twitter, Instagram ou Linkedln.

## Revendications

1. Système photographique comportant :
- un module d'acquisition (1) d'images comportant :
- un miroir sans tain (2) permettant à un utilisateur (3) placé face audit miroir sans tain (2) de voir son image réfléchie, et
- des moyens d'acquisition optique (4) placés du côté dudit miroir sans tain (2) opposé audit utilisateur (3), et
- un dispositif de déclenchement permettant de déclencher lesdits moyens d'acquisition optique (4) pour effectuer une acquisition d'images,
**caractérisé en ce que** :
- lesdits moyens d'acquisition optique (4) permettent de prendre une pluralité d'images correspondant à une pluralité de prises de vues de l'utilisateur,
- ledit dispositif de déclenchement est un terminal mobile (6) connecté audit module d'acquisition (1) via un réseau (5), ledit terminal mobile (6) comprenant des moyens de traitement de données (61) configurés pour recevoir depuis ledit module d'acquisition (1) ladite pluralité d'images et la traiter de sorte à reconstruire une image panoramique de l'utilisateur.

2. Système selon la revendication précédente, dans lequel le terminal mobile (6) comporte des moyens de stockage (62) des images acquises.

3. Système selon l'une quelconque des revendications précédentes, dans lequel une application mise en œuvre par les moyens de traitement de données (61) du terminal mobile (6) permet à la fois de déclencher les moyens d'acquisition optique (4) pour effectuer une acquisition d'images et de traiter la pluralité d'images de sorte à reconstruire une image panoramique.

4. Système selon l'une quelconque des revendications précédentes, dans lequel le réseau (5) est un réseau sans fil choisi parmi un réseau wifi, un réseau bluetooth, un réseau infrarouge ou un réseau de téléphonie.

5. Système selon l'une quelconque des revendications précédentes, dans lequel les moyens d'acquisition optique (4) comprennent une caméra mobile.

6. Système selon l'une quelconque des revendications précédentes, dans lequel les moyens d'acquisition optique (4) comprennent une pluralité de caméras.

7. Procédé de photographie comportant les étapes :
- de déclenchement, par l'envoi d'une requête provenant d'un terminal mobile (6), d'un module d'acquisition (1) comportant :
- un miroir sans tain (2) permettant à un utilisateur (3) placé face audit miroir sans tain (2) de voir son image réfléchie, et
- des moyens d'acquisition optique (4) placés du côté dudit miroir sans tain (2) opposé audit utilisateur (3),
- d'acquisition par lesdits moyens d'acquisition optique (4) d'une pluralité d'images correspondant à une pluralité de prises de vues de l'utilisateur,
- de transmission audit terminal mobile (6) via un réseau (5) de ladite pluralité d'images, et
- de traitement par des moyens de traitement de données (61) dudit terminal mobile (6) de ladite pluralité d'images de sorte à reconstruire une image panoramique de l'utilisateur.

8. Procédé selon la revendication précédente, comportant une étape supplémentaire de sauvegarde de l'image panoramique reconstruite par des moyens de stockage (62) du terminal mobile (6).

9. Procédé selon l'une quelconque des revendications 7 ou 8, comportant une étape supplémentaire d'identification du terminal mobile (6) par le module d'acquisition (1).

10. Procédé selon l'une quelconque des revendications 7, 8 ou 9, comportant une étape supplémentaire de transmission de l'image panoramique reconstruite par le terminal mobile (6) via le réseau (5) à un serveur.

## Patentansprüche

1. Fotografisches System, Folgendes beinhaltend:
- ein Bilderfassungsmodul (1), Folgendes beinhaltend:
- einen Einwegspiegel (2), der es einem Benutzer (3), der gegenüber dem Einwegspiegel (2) platziert ist, erlaubt, sein reflektiertes Bild zu sehen, und
- optische Erfassungsmittel (4), die auf Seiten des Einwegspiegels (2) gegenüber dem Benutzer (3) platziert sind, und
- eine Auslösevorrichtung, die es erlaubt, die optischen Erfassungsmittel (4) auszulösen, um eine Bilderfassung durchzuführen,
**dadurch gekennzeichnet, dass**:
- es die optischen Erfassungsmittel (4) erlauben, eine Vielzahl von Bildern entsprechend einer Vielzahl von Aufnahmen des Benutzers aufzunehmen,
- wobei die Auslösevorrichtung ein mobiles Endgerät (6) ist, das über ein Netzwerk (5) mit dem Bilderfassungsmodul (1) verbunden ist, wobei das mobile Endgerät (6) Datenverarbeitungsmittel (61) umfasst, die konfiguriert sind, um aus dem Bilderfassungsmodul (1) die Vielzahl von Bildern zu empfangen und sie derart zu bearbeiten, um ein Panoramabild des Benutzers zu rekonstruieren.

2. System nach dem vorstehenden Anspruch, wobei das mobile Endgerät (6) Speichermittel (62) der erfassten Bilder beinhaltet.

3. System nach einem der vorstehenden Ansprüche, wobei eine Applikation, die durch die Datenverarbeitungsmittel (61) des mobilen Endgeräts (6) eingesetzt wird, es sowohl erlaubt, die optischen Erfassungsmittel (4) auszulösen, um eine Erfassung von Bildern durchzuführen, als auch die Vielzahl von Bildern derart zu bearbeiten, um ein Panoramabild zu rekonstruieren.

4. System nach einem der vorstehenden Ansprüche, wobei das Netzwerk (5) ein drahtloses Netzwerk ist, das aus einem W-LAN Netzwerk, einem Bluetooth-Netzwerk, einem Infrarot-Netzwerk, oder einem Telefonnetzwerk ausgewählt wird.

5. System nach einem der vorstehenden Ansprüche, wobei die optischen Erfassungsmittel (4) eine mobile Kamera umfassen.

6. System nach einem der vorstehenden Ansprüche, wobei die optischen Erfassungsmittel (4) eine Vielzahl von Kameras umfassen.

7. Verfahren für Fotografie, die folgenden Schritte beinhaltend:
- Auslösen durch Senden einer Anfrage, die aus einem mobilen Endgerät (6) stammt, eines Erfassungsmoduls (1), Folgendes beinhaltend:
- einen Einwegspiegel (2), der es einem Benutzer (3), der gegenüber dem Einwegspiegel (2) platziert ist, erlaubt, sein reflektiertes Bild zu sehen, und
- optische Erfassungsmittel (4), die auf Seiten des Einwegspiegels (2) gegenüber dem Benutzer (3) platziert sind,
- Erfassen durch die optischen Erfassungsmittel (4) einer Vielzahl von Bildern entsprechend einer Vielzahl von Aufnahmen des Benutzers,
- Übertragen der Vielzahl von Bildern über ein Netzwerk (5) zum mobilen Endgerät (6), und
- Bearbeiten durch die Datenverarbeitungsmittel (61) des mobilen Endgeräts (6) der Vielzahl von Bildern derart, um ein Panoramabild des Benutzers zu rekonstruieren.

8. Verfahren nach dem vorstehenden Anspruch, einen zusätzlichen Schritt zum Sichern des rekonstruierten Panoramabildes durch Speichermittel (62) des mobilen Endgeräts (6) beinhaltend.

9. Verfahren nach einem der Ansprüche 7 oder 8, einen zusätzlichen Schritt des Identifizierens des mobilen Endgeräts (6) durch das Erfassungsmodul (1) beinhaltend.

10. Verfahren nach einem der Ansprüche 7, 8 oder 9, einen zusätzlichen Schritt des Übertragens des durch das mobile Endgerät (6) rekonstruierten Panoramabildes über das Netzwerk (5) zu einem Server.

## Claims

1. Photographic system including:
- an image acquisition module (1) including:
- a one-way mirror (2) allowing a user (3) placed facing said one-way mirror (2) to see his reflected image, and
- optical acquisition means (4) placed on the side of said one-way mirror (2) opposite to said user (3), and
- a triggering device allowing to trigger said optical acquisition means (4) to perform an image acquisition,
**characterised in that**:
- said optical acquisition means (4) allow taking a plurality of images corresponding to a plurality of shots of the user,
- said triggering device is a mobile terminal (6) connected to said acquisition module (1) via a network (5), said mobile terminal (6) comprising data processing means (61) configured to receive from said acquisition module (1) said plurality of images and process it so as to reconstruct a panoramic image of the user.

2. System according to the preceding claim, wherein the mobile terminal (6) includes means (62) for storing the acquired images.

3. System according to any one of the preceding claims, wherein an application implemented by the data processing means (61) of the mobile terminal (6) allows both triggering the optical acquisition means (4) to perform an image acquisition and processing the plurality of images so as to reconstruct a panoramic image.

4. System according to any one of the preceding claims, wherein the network (5) is a wireless network selected from a Wi-Fi network, a Bluetooth network, an infrared network or a telephone network.

5. System according to any one of the preceding claims, wherein the optical acquisition means (4) comprise a mobile camera.

6. System according to any one of the preceding claims, wherein the optical acquisition means (4) comprise a plurality of cameras.

7. Photography method including the steps:
- of triggering, by sending a request from a mobile terminal (6), an acquisition module (1) including:
- a one-way mirror (2) allowing a user (3) placed facing said one-way mirror (2) to see his reflected image, and
- optical acquisition means (4) placed on the side of said one-way mirror (2) opposite to said user (3),
- of acquiring by said optical acquisition means (4) a plurality of images corresponding to a plurality of shots of the user,
- of transmitting said plurality of images to said mobile terminal (6) via a network (5), and
- of processing said plurality of images by data processing means (61) of said mobile terminal (6) so as to reconstruct a panoramic image of the user.

8. Method according to the preceding claim, including an additional step of saving the panoramic image reconstructed by storage means (62) of the mobile terminal (6).

9. Method according to any one of claims 7 or 8, including an additional step of identifying the mobile terminal (6) by the acquisition module (1).

10. Method according to any one of claims 7, 8 or 9, including an additional step of transmitting the reconstructed panoramic image by the mobile terminal (6) via the network (5) to a server.
